# EUROPÄISCHE PATENTSCHRIFT

(11) **EP 1 053 836 B1**
(45) Veröffentlichungstag und Bekanntmachung des Hinweises auf die Patenterteilung: **25.06.2008**
(21) Anmeldenummer: 00109756.7
(22) Anmeldetag: 09.05.2000
(51) Int. Cl.: B25J 19/00

(54) **Haltearm für Energiezuführung**
Holding arm for supplying energy
Bras de soutien pour l'alimentation en énergie

(30) Priorität: 15.05.1999 DE 29908623 U
(43) Veröffentlichungstag der Anmeldung: 22.11.2000
(73) Patentinhaber: KUKA Roboter GmbH, 86165 Augsburg (DE)
(72) Erfinder: Stefan Karlinger, D-86199 Augsburg (DE)
(74) Vertreter: Lempert, Jost

(56) Entgegenhaltungen:
- WO-A-98/19090
- DE-U- 9 217 659
- JP-A- 63 039 416

## Beschreibung

Die Erfindung betrifft einen Roboter mit zumindest teilweise außenseitig verlaufenden Kabeln. Bei derartigen Kabeln handelt es sich um in einem Schlauch geführten Versorgungskabeln von Werkzeugen des Roboters, mit einer Längenreserve insbesondere im Bereich der Achse A3 des Roboters. Die heraus resultierende Distanzänderungen zwischen einzelnen Punkten des Roboter sind insbesondere bei der Führung der Versorgungskabel, beispielsweise von Werkzeugen des Roboters, zu beachten.

Um solche Distanzänderungen ohne Beanspruchung der Versorgungskabel vornehmen zu können, müssen die Versorgungskabel eine Längenreserve aufweisen. Bei außenseitig geführten Versorgungskabeln besteht dabei das Problem, daß in Arbeitspositionen des Roboterarms, in denen die Längenreserve nicht genutzt ist, die Versorgungskabel eine relativ große Störkontur verursachen können und daß durch die Längenreserve ein Abknicken der Versorgungskabel bei Beanspruchung erfolgen kann..

Die DE 92 17 659 U zeigt einen Roboter, bei dem auf der Oberseite des Armes des Roboters ein Block mit zwei senkrecht nach oben ragenden Stäben angeordnet ist, an denen sich im wesentlich horizontal, unter einem endlichen Relativwinkel zueinander flexible Arme erstrecken, die also in sämtliche Richtungen biegbar sind, an deren Enden ringförmige Elemente angeordnet sind, durch die eine Versorgungsleitung geführt ist.

Die Konstruktion ist aufwendig. Darüber hinaus kann aufgrund der völlig freien Biegsamkeit der flexiblen Federarme der Schlauch nicht präzise geführt werden.

Der Erfindung liegt daher die Aufgabe zugrunde, einen gattungsgemäßen Roboter dahingehend weiterzubilden, daß mit möglichst einfachen Bauteilen, die durch die Versorgungskabel bedingte Störkontur möglichst gering gehalten wird und daß unter hinreichend präzisen Führung der Kabel trotz ihrer Längenreserve ein Abknicken derselben vermieden ist.

Erfindungsgemäß wird die genannte Aufgabe bei einem Roboter der eingangs gekannten Art durch die Merkmale des kennzeichnenden Teils des Anspruchs 1 gelöst.

Durch das die Versorgungskabel im Bereich ihrer Längenreserve führende Basisteil, erfahren die Versorgungskabel des weiteren eine enge Führung an der Außenseite der Roboterteile, was zu einer reduzierten Störkontur führt und durch die verstärkte Führung auch zu einem kleineren Abknickungsrisiko der Versorgungskabel. Durch die Anordnung der Versorgungskabel an dem Basisteil ist auch das seitliche Ausweichen der Versorgungskabel stark vermindert.

Durch den gegen das Basisteil verschwenkbaren Schenkel und die Anordnung der Element zur Führung der Kabel sowohl an dem Schenkel als auch an dem Basisteil kann die Kabelführung dem beanspruchten Kabel nachgeführt, wodurch durch den auftretenden Winkel zwischen den Führungselementen des Abknickrisiko deutlich reduziert ist.

Gemäß einer bevorzugten Ausführungsform weist das Basisteil Anschläge auf, die die Verschwenkbarkeit des Schenkels in beide Verschwenkungsrichtungen begrenzten und mit denen sichergestellt werden kann, daß die Wegführung der Versorgungskabel nur in einem bestimmten, begrenzten Bereich variieren kann. Der Schenkel oder Arm ist grundsätzlich in dem begrenzten Bereich frei beweglich. Seine Position wird durch den von ihm gehaltenen Schlauch und dessen Elastizität bestimmt.

Der Schenkel kann zusätzlich durch ein Federelement mit dem Basisteil verbunden sein, das den Schenkel im unbelasteten Zustand in einer bestimmten Position hält und aus der er nur durch eine gegen die Federkraft wirkende Beanspruchung herausbewegt werden kann.

Gemäß einer günstigen Ausbildung ist an dem Basisteil eine Leiste zur Fixierung der einzelnen Versorgungskabel angeordnet, wodurch diese im Anfangsbereich der Längenreserve festgelegt sind und somit keine Beeinflussung der Kabelführung in dem Abschnitt vor der Längenreserve erfolgt.

Mit Vorteil weist diese Leiste einzelnen Bohrungen auf, in denen die Versorgungskabel einzeln geführt und somit auch einzeln fixiert werden können, wodurch Beeinflussungen der Versorgungskabel untereinander weitgehend vermieden sind.

Bevorzugt sind die Versorgungskabel an dem Führungselement an dem Schenkel beweglich geführt. Damit bleiben die Versorgungskabel entlang des durch die Führungselemente vorgegebenen Weges beweglich und können den Bewegungen des Roboterarms folgen.

In einer besonders günstigen Ausführung sind die Versorgungskabel in einem Schutzschlauch geführt, der ein Beschädigen oder auch ein Verdrehen der Versorgungskabel verhindert, wobei auch der Schlauch an dem Basisteil selbst festgelegt und an dem Schenkel beweglich geführt ist.

Mit Vorteil weist das Basisteil weitere Einrichtungen zur Anbringung von Führungselementen für die Versorgungskabel auf, mit denen auftretende Überlängen optimal, also mit minimaler Störkontur an den Roboterteilen geführt werden können.

In einer bevorzugten Ausführungsform weist das Basisteil ein Befestigungselement zur Verbindung mit einem Roboterarm des Roboters auf, wobei dieses insbesondere mit Vorteil an den Motorschrauben der Achse A3 angeordnet ist. Die Anordnung des Befestigungselments im unmittelbaren Bereich der Drehachse des Roboterarms führt bei Bewegungen des Roboterarms zu einer Relativbewegung zwischen dem Versorgungskabel und dem Basisteil, wobei das im Verhältnis zu den Drehbewegungen des Roboterarms um die Achse A3 des Roboters ortsfeste Basisteil die abknickungsfreie Führung des Versorgungskabels gewährleistet.

In einer besonders einfachen und preiswerten Ausbildung ist das Befestigungselement ein Flasch.

Weitere Vorteile und Merkmale der Erfindung ergeben sich aus den Ansprüche und aus der nachfolgenden Beschreibung eines in den Zeichnungen dargestellten Ausführungsbeispiels eines erfindungsgemäß ausgebildeten Roboters. Dabei zeigt:
- Fig. 1: einen Industrieroboter in perspektivischer Ansicht,
- Fig. 2: einen Detailausschnitt des Industrieroboters im Bereich der Achse A3 in Draufsicht,
- Fig. 3: erfindungsgemäße Basisteil und Schenkel in perspektivischer Darstellung.

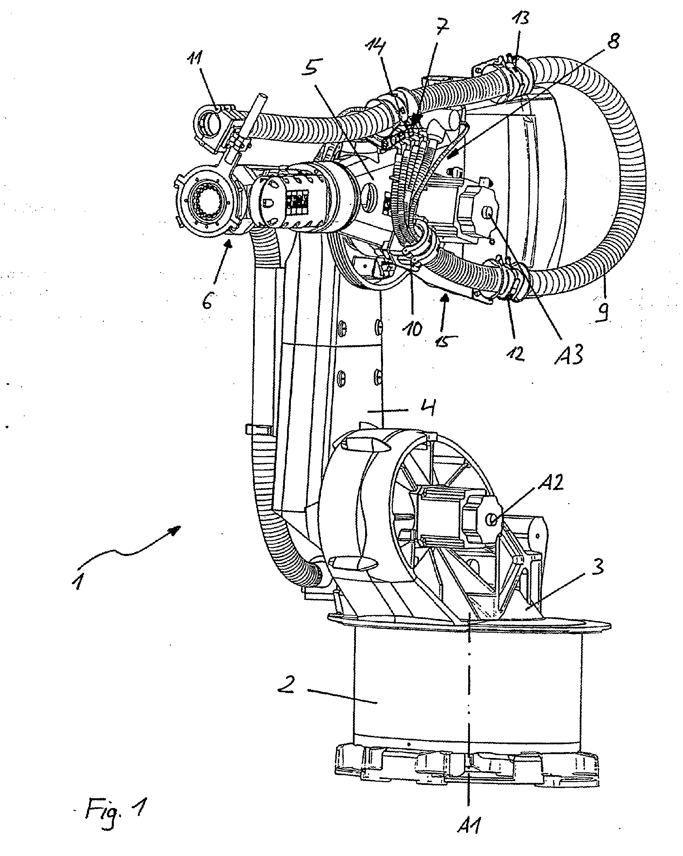

Der in Fig. 1 gezeigte erfindungsgemäß ausgestaltete Industrieroboter 1 weist einen Sockel 2 mit einem auf diesem aufsitzenden, um die vertikale Achse A1 verschwenkbaren Karussell 3 auf. Ein erster Roboterarm 4 ist um die Achse A2 verschwenkbar an dem Karussell 3 angeordnet. Ein zweiter Roboterarm 5, der die Roboterhand 6 zur Aufnahme von Bearbeitungswerkzeugen etc. trägt, ist um die horizontale Achse A3 verschwenkbar an dem Roboterarm 4 angeordnet. An der Außenseite des Roboterarms 4 sind Kabel zu einer am Roboterarm 5 angeordneten Kabeltrennstelle 7 geführt. Von der Kabeltrennstelle 7 führen Versorgungskabel 8 zu dem an der Roboterhand 6 angeordneten, nicht gezeigten Werkzeug. Die Versorgungskabel 7 sind dabei in einem Schutzschlauch 9 geführt, wobei der Schutzschlauch 9 und damit auch die Versorgungskabel 7 in einer zuerst nach unten gerichteten, weitgehend kreisförmigen Schlaufe verlaufen, die dann weitgehend parallel zu dem Roboterarm 5 zu der Roboterhand 6 geführt ist. Der Schutzschlauch 9 ist dabei an seinem Anfang durch eine Kabelschelle 10 an dem Roboterarm 5 und an seinem Ende durch eine Schelle 11 an der Roboterhand 6 festgelegt. Zwischen den beiden festen Schellen 10 und 11 ist der Schutzschlauch 9 an Schellen 12,13 und 14 schwimmend geführt. Die Schellen 10 und 12 sind dabei im Bereich der Roboterachse A3 gemeinsam an einem Basisteil 15 in Form einer Grundplatte angeordnet.

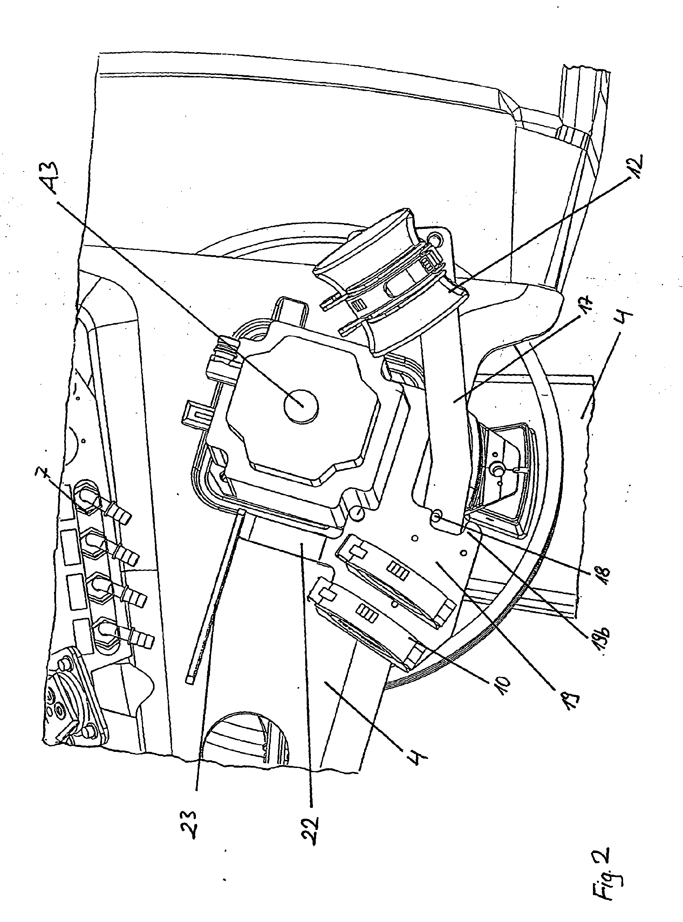

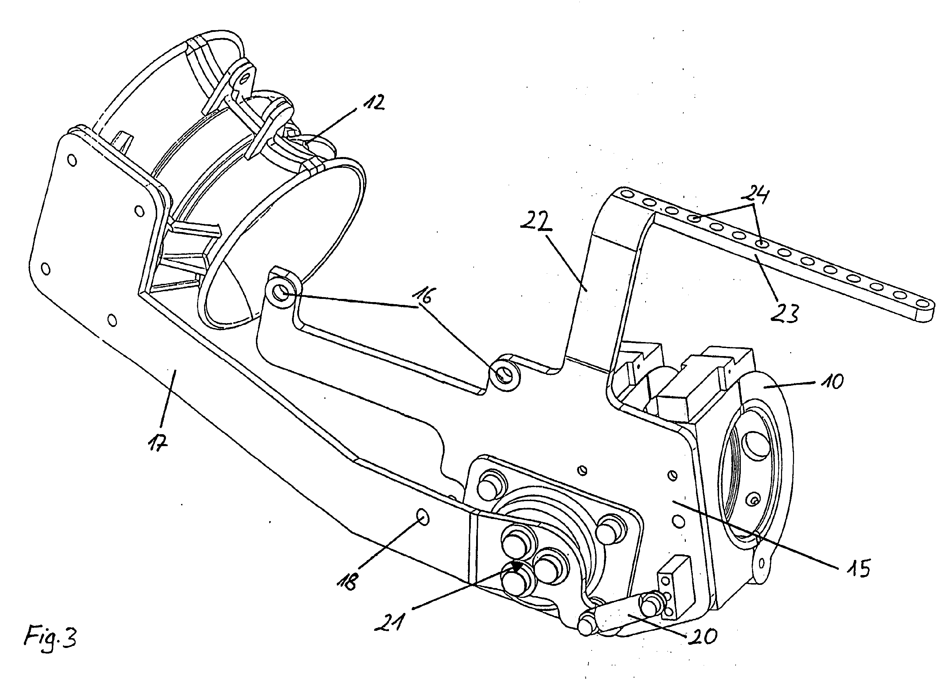

Fig. 2 zeigt einen Ausschnitt des Roboters 1 aus Fig. 1 im Bereich der Achse A3, um die der Roboterarm 5 verschwenkbar an dem Roboterarm 4 angeordnet ist. In Fig. 2 sind lediglich die Anschlüsse der Kabeltrennstelle 7 aber nicht die in Fig. 1 gezeigten Versorgungskabel 8 und der Schutzschlauch 9 gezeigt. Im Bereich der Achse A3 ist das Basisteil 15 angeordnet, das entsprechende Bohrungen 16 aufweist, um gemeinsam mit dem Motor an dem Roboterarm 5 festgelegt zu werden. Im Bereich der Achse A3 ist auch ein gegen das Basisteil beweglicher Schenkel 17 angeordnet. Der Schenkel 17 ist an dem Basisteil 15 schwenkbar angeordnet, wobei die Verschwenkbarkeit durch einen in einer Aussparung mit Anschlägen des Basisteils 15 geführten Zapfen 18 des Schenkels 17 begrenzt ist. An dem Basisteil 15 ist die feste Doppelschelle 10 und an dem Schenkel 17 zu dieser verschwenkbar die schwimmende Schelle 12 angeordnet. Wie in Fig. 3 gezeigt wird der Schenkel 17 an dem Basisteil 15 durch eine Zugfeder 20 in einer bevorzugten Position gehalten, weitgehend entspannt, muss nicht vorgesehen sein, aus der der Schenkel 17 mit der Schelle 12 nur gegen die Kraft der Feder 20 um die Achse 21 verschwenkt werden kann. Die zwischen dem Basisteil 15 und dem Schenkel 17 angeordnete Feder 20 zieht den Schenkel 17 in die Position in der der Zapfen 18 des Schenkels mit dem Anschlag 19b (Fig. 2) der Basisteil 15 in Kontakt kommt. Bei einer Längenverkürzung der Versorgungskabel bzw. des Schutzschlauchs kann der Schenkel 17 gegen die Zugkraft der Feder 20 verschwenkt werden, so daß die Führungsschelle 12 mit dem Schenkel 17 der Bewegung der Kabel nachgeführt wird, um ein Abknicken der Kabel zu vermeiden.

Wie in Fig. 3 weiter gezeigt ist, weist das Basisteil 15 eine mittels einer Platte 22 von der Grundplatte 19 abgesetzte Leiste 23 mit Bohrungen 24 zur Aufnahme und Führung der Versorgungskabel in dem Bereich zwischen der Kabeltrennstelle 7 und dem Beginn des Schutzschlauches 9 im Bereich der Kabelschelle 10 auf.

### Bezugszeichenliste

- 1: Roboter
- 2: Sockel
- 3: Karussell
- 4: Roboterarm
- 5: Roboterarm
- 6: Roboterhand
- 7: Kabeltrennstelle
- 8: Versorgungskabel
- 9: Schutzschlauch
- 10: Kabelschelle
- 11: Schelle
- 12: Schelle
- 13: Schelle
- 14: Schelle
- 15: Basisteil
- 16: Bohrungen
- 17: Schenkel
- 18: Zapfen
- 19b: Anschlag
- 20: Zugfeder
- 21: Schwenkachse
- 23: Leiste
- 24: Bohrungen
- A1: vertikale Achse
- A2: Achse
- A3: horizontale Achse

## Patentansprüche

1. Roboter mit zumindest teilweise außenseitig verlaufenden Kabeln mit einer Längenreserve und mit einem am Roboter (1) im Bereich der Längenreserve angeordneten Basisteil (15), mit Elementen zur Führung der Kabel, **gekennzeichnet durch**, ein fest am Basisteil angeordnetes erstes Element (10) zur Führung der Kabel (8) und **durch** einen am Basisteil (15) gegen dieses verschwenkbar angeordneten Schenkel (17), an dem ein weiteres Element (12) zur schwimmenden Führung der Kabel (8) angeordnet ist.

2. Roboter nach Anspruch 1, **dadurch gekennzeichnet, daß** das Basisteil (15) Anschläge zur Begrenzung der Verschwenkbarkeit des Schenkels (17) aufweist.

3. Roboter nach Anspruch 1 oder 2, **dadurch gekennzeichnet, daß** zwischen dem Schenkel (17) und dem Basisteil (15) ein Federelement (20) angeordnet ist.

4. Roboter nach einem der Ansprüche 1 bis 3, **dadurch gekennzeichnet, daß** das Basisteil (15) eine Leiste (23) zur Fixierung der einzelnen kabel (8) aufweist.

5. Roboter nach Anspruch 4, **dadurch gekennzeichnet, daß** die Leiste (23) einzelne Bohrungen (24) aufweist.

6. Roboter nach einem der Ansprüche 1 bis 5, **dadurch gekennzeichnet, daß** die kabel (8) an dem weiteren Führungselement (12) an dem Schenkel (17) beweglich geführt sind.

7. Roboter nach einem der Ansprüche 1 bis 6, **gekennzeichnet durch** einen Schutzschlauch (9) zur Aufnahme der kabel (8).

8. Roboter nach einem der Ansprüche 1 bis 7, **dadurch gekennzeichnet, daß** das Basisteil (15) weitere Einrichtungen zum Anbringen von Führungselementen aufweist.

9. Roboter nach einem der Ansprüche 1 bis 8, **dadurch gekennzeichnet, daß** das Basisteil (15) ein Befestigungselement zur Verbindung mit einem Roboterarm (5) des Roboters aufweist.

10. Roboter nach Anspruch 9, **dadurch gekennzeichnet, daß** das Befestigungselement an den Motorschrauben der Achse 3 des Roboters angeordnet ist.

11. Roboter nach einem der Ansprüche 9 oder 10, **dadurch gekennzeichnet, daß** das Befestigungselement ein Flansch ist.

## Claims

1. Robot with at least partly externally running cables with a length reserve and with a base part (15) having elements for guiding the cables located on the robot (1) in the vicinity of the length reserve, **characterized by** a first element (10) for guiding the cables (8) located in fixed manner on the base part and by a leg (17) located on base part (15) and pivotable against the same and on which is located a further element (12) for the floating guidance of the cables (8).

2. Robot according to claim 1, **characterized in that** the base part (15) has stops for limiting the pivotability of leg (17).

3. Robot according to claim 1 or 2, **characterized in that** a spring element (20) is positioned between leg (17) and base part (15).

4. Robot according to one of the claims 1 to 3, **characterized in that** base part (15) has a bar (23) for fixing the individual cables (8).

5. Robot according to claim 4, **characterized in that** the bar (23) has individual holes (24).

6. Robot according to one of the claims 1 to 5, **characterized in that** the cables (8) on the further guide element (12) are movably guided on leg (17).

7. Robot according to one of the claims 1 to 6, **characterized by** a protective hose (9) for receiving cables (8).

8. Robot according to one of the claims 1 to 7, **characterized in that** base part (15) has further devices for fitting guide elements.

9. Robot according to one of the claims 1 to 8, **characterized in that** base part (15) has a fastening element for connection to a robot arm (5) of the robot.

10. Robot according to claim 9, **characterized in that** the fastening element is located on motor screws of the robot A3 axis.

11. Robot according to one of the claims 9 or 10, **characterized in that** the fastening element is a flange.

## Revendications

1. Robot comprenant des câbles disposés au moins partiellement du côté extérieur avec une réserve de longueur et comprenant une embase (15) disposée sur le robot (1) dans la zone de la réserve de longueur, avec des éléments de guidage des câbles, **caractérisé par** un premier élément (10) fixé sur l'embase pour le guidage des câbles (8) et un bras (17) disposé sur l'embase (15) pouvant pivoter à l'encontre de celle-ci, sur lequel est monté un autre élément (12) pour le guidage flottant des câbles (8).

2. Robot selon la revendication 1, **caractérisé en ce que** l'embase (15) présente des butées pour délimiter le pivotement du bras (17).

3. Robot selon la revendication 1 ou 2, **caractérisé en ce qu'**un élément élastique (20) est disposé entre le bras (17) et l'embase (15).

4. Robot selon l'une quelconque des revendications 1 à 3, **caractérisé en ce que** l'embase (15) présente une règle (23) pour la fixation individuelle des câbles (8).

5. Robot selon la revendication 4, **caractérisé en ce que** la règle (23) présente des perçages (24) individuels.

6. robot selon l'une quelconque des revendications 1 à 5, **caractérisé en ce que** les câbles (8) sont guidés mobiles sur l'élément de guidage (12) supplémentaire sur le bras (17).

7. Robot selon l'une quelconque des revendications 1 à 6, **caractérisé par une** gaine tubulaire de protection (9) de réception des câbles (8).

8. Robot selon l'une quelconque des revendications 1 à 7, **caractérisé en ce que** l'embase (15) présente d'autres dispositifs de montage d'éléments de guidage.

9. Robot selon l'une quelconque des revendications 1 à 8, **caractérisé en ce que** l'embase (15) présente un élément de fixation pour la liaison avec un bras (5) du robot.

10. Robot selon la revendication 9, **caractérisé en ce que** l'élément de fixation est disposé sur les vis du moteur de l'axe A3 du robot.

11. Robot selon l'une quelconque des revendications 9 ou 10, **caractérisé en ce que** l'élément de fixation est une bride.
